(19) Europäisches Patentamt
European Patent Office
Office européen des brevets

(11) EP 4 573 901 A1

(12) **EUROPEAN PATENT APPLICATION**

(43) Date of publication:
**25.06.2025 Bulletin 2025/26**

(21) Application number: **24222543.1**

(22) Date of filing: **20.12.2024**

(51) International Patent Classification (IPC):
***A01N 33/12*** *(2006.01)* ***A01N 43/653*** *(2006.01)*
***A01N 37/34*** *(2006.01)* ***A01N 25/34*** *(2006.01)*
***A01N 25/30*** *(2006.01)* ***A01P 1/00*** *(2006.01)*
***C09D 5/14*** *(2006.01)* ***E04F 13/16*** *(2006.01)*

(52) Cooperative Patent Classification (CPC):
(C-Sets available)
**A01N 33/12; A01N 43/653; A01P 1/00; C09D 5/14; E04F 13/16** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.12.2023 US 202363612789 P**

(71) Applicant: **Armstrong World Industries, Inc.**
**Lancaster, PA 17604-3001 (US)**

(72) Inventors:
- **MASIA, Steven L.**
  **Lancaster, PA 17604 (US)**
- **HUGHES, John E.**
  **Lancaster, PA 17604 (US)**

(74) Representative: **Studio Torta S.p.A.**
**Via Viotti, 9**
**10121 Torino (IT)**

Remarks:
Claims filed after the date of filing of the application (Rule 68(4) EPC).

(54) **ANTIMICROBIAL BUILDING PANELS**

(57) Described herein is a building panel comprising: a fibrous substrate; and a coating applied to the substrate, the coating comprising a blend of: a binder comprising a latex polymer; a thickening agent; a pigment composition; and an antimicrobial composition comprising a quaternary amine; a surfactant composition having an HLB value ranging from about 11 to 13; wherein the antimicrobial composition is present in an amount ranging from about 1 wt. % to about 10 wt. % based on the total weight of the coating.

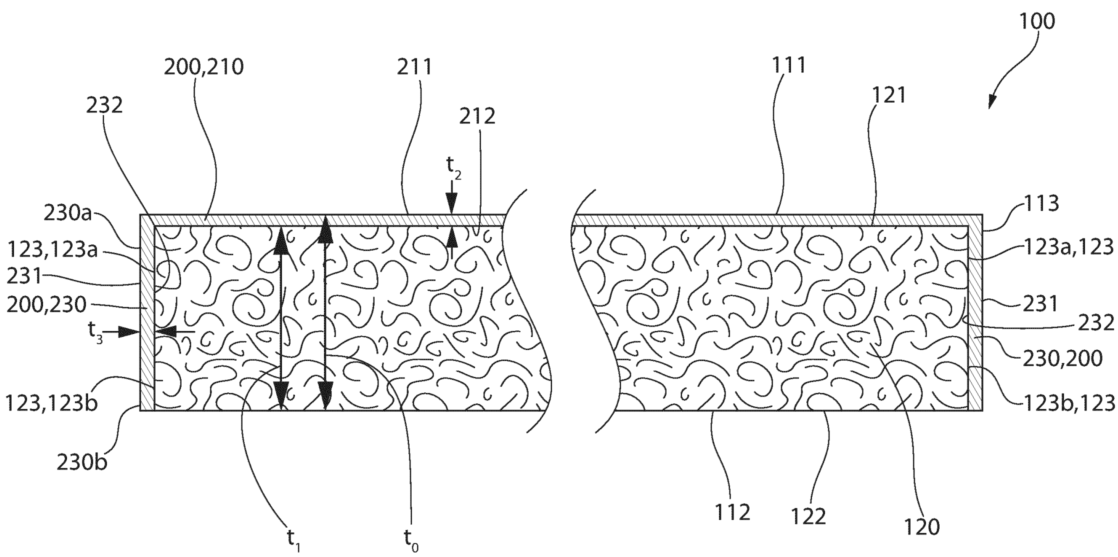


FIG. 2

EP 4 573 901 A1

(52) Cooperative Patent Classification (CPC): (Cont.)

C-Sets
**A01N 33/12, A01N 25/30;**
**A01N 33/12, A01N 25/30, A01N 25/34;**
**A01N 33/12, A01N 25/34;**
**A01N 43/653, A01N 37/34;**
**A01N 43/653, A01N 37/34, A01N 25/34**

## Description

## BACKGROUND OF THE INVENTION

The presence of bacteria and/or fungus on surfaces is a major concern today affecting home, work, and recreational environments. Exposure to certain bacteria and/or fungi (or their spores) can seriously impact the health of humans, pets and other animals. Previous attempts at imparting protective properties to a building panel included applying an antibacterial and/or antifungal coating to a surface of a building material. However, such previous coatings required relatively large amounts of certain anti-microbial agents that may have limited availability. Thus, the need exists for a coating that can exhibit adequate protective performance using alternative agents.

## BRIEF SUMMARY OF THE INVENTION

The present invention may be directed to a building panel comprising a fibrous substrate; and a coating applied to the substrate, the coating comprising a blend of: a binder comprising a latex polymer; a thickening agent; a pigment composition; and an antimicrobial composition comprising a quaternary amine; a surfactant composition having an HLB value ranging from about 11 to 13; wherein the antimicrobial composition is present in an amount ranging from about 1 wt. % to about 10 wt. % based on the total weight of the coating.

Other embodiments of the present invention may include a building panel comprising: a fibrous substrate; and a coating applied to the substrate, the coating comprising a blend of: a binder comprising a latex polymer; a thickening agent comprising laponite; a pigment composition comprising titanium dioxide and calcium carbonate; and an antimicrobial composition comprising a quaternary amine that is a dialkyl ammonium compound having a halide anion; and a surfactant composition having an HLB value ranging from about 11 to 13, the surfactant composition comprising a first surfactant that is a first monooleate compound and a second surfactant that is a second monooleate compound, the first monooleate compound and the second monooleate compound are different.

Other embodiments of the present invention include a building system comprising: a support surface; and at least one building panel according to the aforementioned building panels, wherein the building panel is supported by the support surface.

Other embodiments of the present invention include a coating composition for application to a building panel, the coating comprising: a liquid carrier; solid coating component comprising a binder comprising a latex polymer; a thickening agent comprising laponite; a pigment composition comprising titanium dioxide and calcium carbonate; and an anti-microbial composition comprising: a quaternary amine; a surfactant composition having an HLB value ranging from about 11 to 13; wherein the antimicrobial composition is present in an amount ranging from about 1 wt. % to about 10 wt. % based on the total weight of the solid coating component.

Other embodiments of the present invention include a method of coating a substrate comprising: a) applying the coating composition according to anyone of the aforementioned coatings to a fibrous substrate; b) drying the coating composition such that the liquid carrier is removed from the substrate.

Other embodiments of the present invention include a method of forming an antimicrobial coating comprising: forming an emulsion comprising an antimicrobial composition comprising: a quaternary amine; a surfactant composition having an HLB value ranging from about 11 to 13; blending the emulsion with a pigment composition comprising titanium dioxide and calcium carbonate to form the antimicrobial coating; wherein the antimicrobial coating further comprises a liquid carrier; a latex polymer; and a thickening agent comprising laponite.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

## BRIEF DESCRIPTION OF THE DRAWINGS

The present invention will become more fully understood from the detailed description and the accompanying drawings, wherein:

FIG. 1 is top perspective view of a coated building panel according to the present invention;
FIG. 2 is a cross-sectional view of the coated building panel according to the present invention, the cross-sectional view being along the II line set forth in Figure 1; and
FIG. 3 is a ceiling system comprising the coated building panel of the present invention.

## DETAILED DESCRIPTION OF THE INVENTION

The following description of the preferred embodiment(s) is merely exemplary in nature and is in no way intended to limit the invention, its application, or uses.

As used throughout, ranges are used as shorthand for describing each and every value that is within the range. Any value within the range can be selected as the terminus of the range. In addition, all references cited herein are hereby incorporated by referenced in their entireties. In the event of a conflict in a definition in the present disclosure and that of a cited reference, the present disclosure controls.

Unless otherwise specified, all percentages and amounts expressed herein and elsewhere in the specification should be understood to refer to percentages by weight. The amounts given are based on the active weight of the material.

The description of illustrative embodiments according to principles of the present invention is intended to be read in connection with the accompanying drawings, which are to be considered part of the entire written description. In the description of embodiments of the invention disclosed herein, any reference to direction or orientation is merely intended for convenience of description and is not intended in any way to limit the scope of the present invention. Relative terms such as "lower," "upper," "horizontal," "vertical," "above," "below," "up," "down," "top," and "bottom" as well as derivatives thereof (e.g., "horizontally," "downwardly," "upwardly," etc.) should be construed to refer to the orientation as then described or as shown in the drawing under discussion. These relative terms are for convenience of description only and do not require that the apparatus be constructed or operated in a particular orientation unless explicitly indicated as such.

Terms such as "attached," "affixed," "connected," "coupled," "interconnected," and similar refer to a relationship wherein structures are secured or attached to one another either directly or indirectly through intervening structures, as well as both movable or rigid attachments or relationships, unless expressly described otherwise. Moreover, the features and benefits of the invention are illustrated by reference to the exemplified embodiments. Accordingly, the invention expressly should not be limited to such exemplary embodiments illustrating some possible non-limiting combination of features that may exist alone or in other combinations of features; the scope of the invention being defined by the claims appended hereto.

Unless otherwise specified, all percentages and amounts expressed herein and elsewhere in the specification should be understood to refer to percentages by weight. The amounts given are based on the active weight of the material. According to the present application, the term "about" means +/- 5% of the reference value. According to the present application, the term "substantially free" less than about 0.1 wt. % based on the total of the referenced value.

The present invention is directed to a protective coating (also referred to as the "coating" or "antimicrobial coating") that exhibits antimicrobial activity. According to the present invention, a microbe may refer to a fungi source (e.g., mildew, mold), bacteria or bacterial growth. According to the present invention, the term "antimicrobial activity" refers to a reduction in activity of a bacteria source or growth, and/or a fungi source or growth. Accordingly, the term antimicrobial activity may refer to "antibacterial" and/or "antifungal" activity.

As described in greater detail herein, the protective coating may be applied such that the protective coating forms a portion of a coated building panel. The building panel may form part of a building system, whereby the building panel forms a ceiling panel or a wall panel.

Referring to FIGS. 1-3, the present invention includes the coated building panel 100 (referred to herein as "building panel") comprising a first major surface 111 opposite a second major surface 112 and a side surface 113 that extends between the first major surface 111 and the second major surface 112, thereby defining a perimeter of the ceiling panel 100.

Referring to FIG. 3, the present invention may further include a ceiling system 1 comprising one or more of the building panels 100 installed in an interior space, whereby the interior space comprises a plenum space 3 and an active room environment 2. The plenum space 3 provides space for mechanical lines within a building (e.g., HVAC, plumbing, etc.). The active space 2 provides room for the building occupants during normal intended use of the building (e.g., in an office building, the active space would be occupied by offices containing computers, lamps, etc.).

In the installed state, the building panels 100 may be supported in the interior space by one or more parallel support struts 5. Each of the support struts 5 may comprise an inverted T-bar having a horizontal flange 31 and a vertical web 32. The ceiling system 1 may further comprise a plurality of first struts that are substantially parallel to each other and a plurality of second struts that are substantially perpendicular to the first struts (not pictured). In some embodiments, the plurality of second struts intersects the plurality of first struts to create an intersecting ceiling support grid 6. The plenum space 3 exists above the ceiling support grid 6 and the active room environment 2 exists below the ceiling support grid 6.

In the installed state, the first major surface 111 of the building panel 100 may face the active room environment 2 and the second major surface 112 of the building panel 100 may face the plenum space 3. The building panel 100 may be installed such that the horizontal flange 31 contacts the first major surface 111 of the building panel 100, thereby vertically supporting the building panel 100 in the ceiling system 1.

Referring now to FIGS. 1 and 2, the building panel 100 of the present invention may have a panel thickness $t_0$ as measured from the first major surface 111 to the second major surface 112. The panel thickness $t_0$ may range from about 12

mm to about 40 mm - including all values and sub-ranges there-between. The building panel 100 may have a length $L_P$ ranging from about 30 cm to about 310 cm - including all values and sub-ranges there-between. The building panel 100 may have a width $W_P$ ranging from about 10 cm to about 125 cm - including all values and sub-ranges there-between.

The building panel 100 may comprise a body 120 and the protective coating 200 applied thereto - as discussed further herein. The body 120 comprises an upper surface 121 opposite a lower surface 122 and a body side surface 123 that extends between the upper surface 121 and the lower surface 122, thereby defining a perimeter of the body 120. The body 120 may have a body thickness $t_1$ that extends from the upper surface 121 to the lower surface 122. The body thickness $t_1$ may range from about 12 mm to about 40 mm - including all values and sub-ranges there-between.

The body 120 may be porous, thereby allowing airflow through the body 120 between the upper surface 121 and the lower surface 122 - as discussed further herein. The body 120 may be comprised of a binder and fibers. In some embodiments, the body 120 may further comprise a filler and/or additive.

Non-limiting examples of binder may include a starch-based polymer, polyvinyl alcohol (PVOH), a latex, polysaccharide polymers, cellulosic polymers, protein solution polymers an acrylic polymer, polymaleic anhydride, epoxy resins, or a combination of two or more thereof. Non-limiting examples of filler may include powders of calcium carbonate, limestone, titanium dioxide, sand, barium sulfate, clay, mica, dolomite, silica, talc, perlite, polymers, gypsum, wollastonite, expanded-perlite, calcite, aluminum trihydrate, pigments, zinc oxide, or zinc sulfate.

The fibers may be organic fibers, inorganic fibers, or a blend thereof. Non-limiting examples of inorganic fibers mineral wool (also referred to as slag wool), rock wool, stone wool, and glass fibers. Non-limiting examples of organic fiber include fiberglass, cellulosic fibers (e.g. paper fiber - such as newspaper, hemp fiber, jute fiber, flax fiber, wood fiber, or other natural fibers), polymer fibers (including polyester, polyethylene, aramid - i.e., aromatic polyamide, and/or polypropylene), protein fibers (e.g., sheep wool), and combinations thereof.

The body 120 may be porous, thereby allowing airflow through the body 120 between the upper surface 121 and the lower surface 122 of the panel body 120. According to the present invention, the term porous refers to the body 120 being porous enough to allow for enough airflow through the body 120 under atmospheric conditions for the body 120 and the resulting building panel 100 to function as an acoustic building panel 100 and corresponding ceiling system 1 or wall system (not pictured) to function as an acoustical ceiling system or acoustical wall system, which requires properties related to noise reduction and sound attenuation properties - as discussed further herein.

Specifically, the body 120 of the present invention may have a porosity ranging from about 60% to about 98% - including all values and sub-ranges there between. In a preferred embodiment, the body 120 has a porosity ranging from about 75% to 95% - including all values and sub-ranges there between.

According to the embodiments where the body 120 is formed from binder and fibers, porosity may be calculated by the following:

$$\% \text{ Porosity} = [V_{Total} - (V_{Binder} + V_F + V_{Filler})] / V_{Total}$$

Where $V_{Total}$ refers to the total volume of the body 120 defined by the upper surface 121 the lower surface, and the body side surfaces 123 of the body 120. $V_{Binder}$ refers to the total volume occupied by the binder in the body 120. $V_F$ refers to the total volume occupied by the fibers in the body 120. $V_{Filler}$ refers to the total volume occupied by the filler in the body 120. Thus, the % porosity represents the amount of free volume within the body 120.

The body 120 of the present invention may exhibit sufficient airflow for the body 120 to have the ability to reduce the amount of reflected sound in an active room environment 2. The reduction in amount of reflected sound in an active room environment 2 is expressed by a Noise Reduction Coefficient (NRC) rating as described in American Society for Testing and Materials (ASTM) test method C423. This rating is the average of sound absorption coefficients at four ⅓ octave bands (250, 500, 1000, and 2000 Hz), where, for example, a system having an NRC of 0.90 has about 90% of the absorbing ability of an ideal absorber. A higher NRC value indicates that the material provides better sound absorption and reduced sound reflection.

The body 120 of the present invention exhibits an NRC of at least about 0.5. In a preferred embodiment, the body 120 of the present invention may have an NRC ranging from about 0.60 to about 0.99 - including all value and sub-ranges there-between.

In addition to reducing the amount of reflected sound in a single active room environment 2, the body 120 of the present invention may also be able to exhibit superior sound attenuation - which is a measure of the sound reduction between an active room environment 2 and a plenary space 3. The ASTM has developed test method E1414 to standardize the measurement of airborne sound attenuation between room environments 2 sharing a common plenary space 3. The rating derived from this measurement standard is known as the Ceiling Attenuation Class (CAC). Ceiling materials and systems having higher CAC values have a greater ability to reduce sound transmission through the plenary space 3 - i.e. sound attenuation function.

The body 120 of the present invention may exhibit a CAC value of 30 or greater. In some embodiments, the body

120 may exhibit a CAC value of 35 or greater.

The building panel 100 may further comprise the protective coating 200 applied to at least one of the upper surface 121 (also referred to the "upper major surface"), the lower surface 122 (also referred to the "lower major surface"), and/or the side surface 123 of the body 120.

As demonstrated by FIGS. 1-3, some embodiments include the protective coating 200 may include a face coating 210 that is applied to the upper surface 121 of the body 120 such that at least a portion of the protective coating 200 forms the first major surface 111 of the building panel 100. In other embodiments, the surface coating 200 may include an edge coating 230 that is applied to the side surface 123 of the body 120 such that at least a portion of the protective coating 200 forms the side surface 113 of the building panel 100.

In other embodiments, the building panel 100 may comprise both the face coating 210 applied to the first major surface 121 of the body 120 as well as the edge coating 230 applied to the side surface 123 of the body 120 such that the protective coating 200 forms at least a portion of first major surface 111 and the side surface 113 of the building panel 100.

Although not shown, the present invention may include the protective coating 200 as a back coating that is applied to the lower surface 122 of the body 120 such that at least a portion of the protective coating 200 forms the second major surface 112 of the building panel 100.

The face coating 210 may comprise an upper surface 211 opposite a lower surface 212. The face coating 210 has a face coating thickness $t_2$ - as measured from the upper surface 211 to the lower surface 212 of the face coating 210. The face coating thickness $t_2$ may range from about 200 $\mu$m (micron) to about 500 $\mu$m - including all thicknesses and sub-ranges there-between. The lower surface 212 of the face coating 210 may be in direct contact with the upper surface 121 of the body 120. The upper surface 211 of the face coating 210 may form at least a portion of the first major surface 111 of the building panel 100 - as discussed further herein.

Although not shown, the building panel 100 of the present invention may further comprise a non-woven scrim. The non-woven scrim may comprise an upper surface opposite a lower surface. The lower surface of the non-woven scrim may be positioned immediately adjacent to and in direct contact with the upper surface 121 of the body 120. The face coating 210 may be applied to the non-woven scrim such that the lower surface 212 of the face coating 210 is in direct contact with the upper surface of the non-woven scrim.

The protective coating 200 may comprise a binder and a protective composition. In some embodiments, the protective coating 200 may further comprise a pigment composition, an additive, and/or a filler.

The protective coating 200, in the dry-state, may be present on the upper surface 121 of the body 120 (as the face coating 210) in an amount ranging from about 26 $g/m^2$ to about 450 $g/m^2$ - including all amounts and sub-ranges there-between. In some embodiments, the protective coating 200, in the dry-state, may be present on the lower surface 122 of the body 120 in an amount ranging from about 26 $g/m^2$ to about 450 $g/m^2$ - including all amounts and sub-ranges there-between.

According to the present invention, the phrase "dry-state" indicates a composition that is substantially free of a liquid carrier (e.g., liquid water). Thus, the face coating 210 in the dry-state may comprise the all dry components (e.g., binder, protective composition, pigment) and less than about 0.1 wt. % of liquid carrier based on the total weight of the protective coating 200.

In a preferred embodiment, the protective coating 200 in the dry-state has a solid's content of about 100 wt. % based on the total weight of the protective coating 200. Conversely, a composition that is in a "wet-state," which refers to a composition containing various amounts of liquid carrier - as discussed further herein.

The binder may be present in the protective coating 200 in an amount ranging from about 1 wt. % to about 10 wt. % based on the total dry-weight of the protective coating 200 - including all wt. % and sub-ranges there-between. In some embodiments, the binder may be present in an amount ranging from about 1 wt. % to about 8 wt. % based on the total weight of the coating - including all amounts and sub-ranges there-between. In some embodiments, the binder may be present in an amount ranging from about 3 wt. % to about 6 wt. % based on the total weight of the coating - including all amounts and sub-ranges there-between. In some embodiments, the binder may be present in an amount ranging from about 4 wt. % to about 5 wt. % based on the total weight of the coating - including all amounts and sub-ranges there-between.

The binder may be polymeric. Non-limiting examples of the first binder include polymers selected from polyvinyl alcohol (PVOH), latex, an acrylic polymer, polymaleic anhydride, or a combination of two or more thereof. Non-limiting examples of latex binder may include a homopolymer or copolymer formed from the following monomers: vinyl acetate (i.e., polyvinyl acetate), vinyl propinoate, vinyl butyrate, ethylene, vinyl chloride, vinylidene chloride, vinyl fluoride, vinylidene fluoride, ethyl acrylate, methyl acrylate, propyl acrylate, butyl acrylate, ethyl methacrylate, methyl methacrylate, butyl methacrylate, hydroxyethyl methacrylate, hydroxyethyl acrylate, styrene, butadiene, urethane, epoxy, melamine, and an ester. Preferably the binder is selected from the group consisting of aqueous lattices of polyvinyl acetate, polyvinyl acrylic, polyurethane, polyurethane acrylic, polystyrene acrylic, epoxy, polyethylene vinyl chloride, polyvinylidene chloride, and polyvinyl chloride.

The protective composition may comprise a protective component. The protective component may be referred to

as an "antimicrobial component." The antimicrobial component may be the component that imparts the antimicrobial activity to the resulting coating. The antimicrobial component may be referred to as an "antibacterial component" when the coating exhibits antibacterial activity. The antimicrobial component may be referred to as an "antifungal component" when the coating exhibits antifungal activity.

It has been discovered that the protective component of the present invention may be capable of imparts more than one type of antimicrobial activity to the resulting coating - therefore, the antibacterial protective component may not preclude the protective component from simultaneously functioning as an antifungal component.

The protective component may be an emulsion. The protective composition may comprise a blend of a quaternary amine and a surfactant composition. The protective composition may comprise an emulsion of a blend of a quaternary amine and a surfactant composition.

The quaternary amine and the surfactant composition may be present in a weight ratio ranging from about 3.0:1.0 to about 1.0:3.0 - including all ratios and sub-ranges there-between. In some embodiments, the quaternary amine and the surfactant composition may be present in a weight ratio ranging from about 2.0:1.0 to about 1.0:2.0 - including all ratios and sub-ranges there-between. In some embodiments, the quaternary amine and the surfactant composition may be present in a weight ratio of about 1.0:1.0.

The quaternary ammonium compounds, also known as "quats", typically comprise at least one quaternary ammonium cation with an appropriate anion. Quats will generally have the general formula (1).

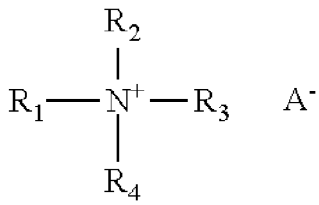

The groups $R_1$, $R_2$, $R_3$ and $R_4$ can vary within wide limits and examples of quaternary ammonium compounds that have anti-microbial properties will be well known to the person of ordinary skill in the art. Typically, two of $R_1$, $R_2$, $R_3$ and $R_4$ are lower alkyl, meaning having 1 to 4 carbon atoms, such as methyl, ethyl, propyl or butyl groups. In addition, two of $R_1$, $R_2$, $R_3$ and $R_4$ are longer chain alkyl groups of 6 to 24 carbon atoms, or a benzyl group. $A^-$ is a monovalent anion or one equivalent of a polyvalent anion of an inorganic or organic acid. Suitable anions for $A^-$ are in principle all inorganic or organic anions, in particular halides, for example chloride or bromide, carboxylates, sulfonates, phosphates or a mixture thereof.

In one embodiment, the quaternary ammonium compound may have the following R groups: $R_1$ is benzyl or $C_{6-18}$-alkyl, $R_2$ is $C_{1-18}$-alkyl or $[(CH_2)_2-O]_nR_5$ where n=1-20, $R_3$ and $R_4$ independently of one another are $C_{1-4}$-alkyl, $R_5$ is hydrogen or unsubstituted or substituted phenyl, and $A^-$ is a monovalent anion or one equivalent of a polyvalent anion of an inorganic or organic acid.

In one embodiment, the quaternary ammonium compound may comprise a dialkyl ammonium compound, such as a dimethyl dialkyl ammonium compound. In one embodiment, the dimethyl dialkyl ammonium compound may have between about 8 and about 12 carbon atoms, such as from about 8 to about 10 carbon atoms in each of the alkyl groups.

Non-limiting examples of dimethyl dialkyl ammonium compounds which may be used as the first biocide include dimethyl dioctyl ammonium compounds such as dimethyl dioctyl ammonium chloride, dimethyl didecyl ammonium compounds such as dimethyl didecyl ammonium chloride and the like. Mixtures of dimethyl dialkyl ammonium compounds may also be used and other anions, such as those described above may also be used. In some embodiments, the dimethyl dialkyl ammonium compound may be didecyldimethylammonium chloride.

The quaternary amine may be present in an amount ranging from about 0.1 wt. % to about 2.0 wt. % based on the total weight of the coating - including all amounts and sub-ranges there-between. In some embodiments, the quaternary amine may be present in an amount ranging from about 0.3 wt. % to about 0.7 wt. % based on the total weight of the coating - including all amounts and sub-ranges there-between. In some embodiments, the quaternary amine may be present in an amount of about 0.5 wt. % based on the total weight of the coating.

The term "surfactant" refers to synthetic and naturally occurring amphiphilic molecules that have hydrophobic portion(s) and hydrophilic portion(s). Due to the amphiphilic (amphipathic) nature, the surfactants and co-surfactants typically can reduce the surface tension between two immiscible liquids, for example, the oil and water phases in an emulsion, stabilizing the emulsion.

The amphiphilic (amphipathic) nature may result in a "hydrophilic-lipophilic balance" or otherwise referred to as a "hydrophile-lipophile balance" or "HLB" - which refers synonymously to a value that is used to index and describe a surfactant according to its relative hydrophobicity/hydrophilicity, relative to other surfactants. A surfactant's HLB value is an indication of the molecular balance of the hydrophobic and lipophilic portions of the surfactant, which is an amphipathic molecule. Each surfactant and mixture of surfactants (and/or co-surfactants) has an HLB value that is a numerical

representation of the relative weight percent of hydrophobic and hydrophilic portions of the surfactant molecule(s). HLB values are derived from a semi-empirical formula. The relative weight percentages of the hydrophobic and hydrophilic groups are indicative of surfactant properties, including the molecular structure, for example, the types of aggregates the surfactant will form and the solubility of the surfactant.

HLB values may be a rough guide, hydrophilic surfactants are generally considered to be those compounds having an HLB value greater than about 10, as well as anionic, cationic, or zwitterionic compounds for which the HLB scale is not generally applicable. Similarly, hydrophobic surfactants are compounds having an HLB value less than about 10. Stated otherwise, surfactants with HLB values greater than 10 or greater than about 10 are more soluble in aqueous compositions, for example, water, and are called "hydrophilic surfactants," while surfactants having HLB values less than 10 or less than about 10 are more soluble in fats, oils and waxes, and are referred to as "hydrophobic surfactants" or "lipophilic surfactants." Relatively amphiphilic surfactants are soluble in oil and water based liquids and typically have HLB values close to 10 or about 10.

Surfactant HLB values range from 1-45, while the range for non-ionic surfactants typically is from 1-20. The more lipophilic a surfactant is, the lower its HLB value. Conversely, the more hydrophilic a surfactant is, the higher its HLB value. The surfactant composition of the present invention may comprise one or more surfactants having an HLB value ranging from about 10 to about 14 - including all HLB values and sub-ranges there-between.

The surfactant composition of the present invention may exhibit an HLB value ranging from about 10 to about 14 - including all HLB values and sub-ranges there-between. In some embodiments, the surfactant composition may exhibit an HLB value ranging from about 11 to about 13 - including all HLB values and sub-ranges there-between. In some embodiments, the surfactant composition may exhibit an HLB value of about 12.

Non-limiting examples of surfactants having an HLB value between about 10 and about 14 include sorbitan monooleate; polyoxyethylene (20) sorbitan monooleate; polysorbate 81 (HLB 10); PEG-40 Sorbitan Hexaoleate (HLB 10); PEG-40 Sorbitan Perisostearate (HLB 10); PEG-10 Olive Glycerides (HLB 10); PEG sorbitol hexaoleate (HLB 10.2); Polysorbate 65 (HLB 10.5); PEG-25 Hydrogenated Castor Oil (HLB 10.8); Polysorbate 85 (HLB 11); PEG-7 Glyceryl Cocoate (HLB 11); PEG-8 Stearate (HLB 11.1); PEG sorbitan tetraoleate (HLB 12); PEG-35 Almond Glycerides (HLB 12); PEG-10 oleyl ether (HLB 12.4); PEG-8 isooctylphenyl ether (HLB 12.4); PEG-10 stearyl ether (HLB 12.4); PEG-35 Castor Oil (HLB 12.5); PEG-10 cetyl ether (HLB 12.9); Nonoxynol-9 (HLB 12.9); PEG-40 Castor Oil (HLB 13); PEG-10 isooctylphenyl ether (HLB 13.5); PEG-40 Hydrogenated Castor Oil (HLB 14)

In some embodiments, the surfactant composition having an HLB value of about 12 comprises at least one of sorbitan monooleate; polyoxyethylene (20) sorbitan monooleate.

In some embodiments, the surfactant composition may comprise a first surfactant that is a first monooleate compound and a second surfactant that is a second monooleate compound. The first monooleate compound and the second monooleate compound may be different. The first monooleate compound may be polyoxyethylene sorbitan monooleate. The second monooleate compound may be sorbitan monooleate. A weight ratio of the first monooleate to the second monooleate may range from about 3.0:1 to about 2.0:1 - including all ratios and sub-ranges there-between.

The surfactant composition may be present in an amount ranging from about 0.1 wt. % to about 2.0 wt. % based on the total weight of the coating - including all amounts and sub-ranges there-between. In some embodiments, the surfactant composition may be present in an amount ranging from about 0.3 wt. % to about 0.7 wt. % based on the total weight of the coating - including all amounts and sub-ranges there-between. In some embodiments, the surfactant composition may be present in an amount of about 0.5 wt. % based on the total weight of the coating.

In some embodiments, the dialkyl ammonium compound having a halide anion is the only quaternary amine present in the antimicrobial composition.

In some embodiments, the protective component may be substantially free of zinc borate. In some embodiments, the protective component may be free of zinc borate.

In some embodiments, the protective composition may be substantially free of sulfur-containing benzimidazole compounds. In some embodiments, the protective composition may be substantially free of triazole compounds. In some embodiments, the protective composition may be substantially free of 2,2-dibromo-3 nitrilopropionamide. In some embodiments, the protective composition is substantially free of biocides other than the quaternary amine compounds.

The protective composition may be present in the protective coating 200 in an amount ranging from about 0.1 wt. % to about 10.0 wt. % based on the total dry-weight of the protective coating 200 - including all wt. % and sub-ranges there-between. The protective composition may be present in the protective coating 200 in an amount ranging from about 0.5 wt. % to about 7.5 wt. % based on the total dry-weight of the protective coating 200 - including all wt. % and sub-ranges there-between.

The pigment composition may be present in the protective coating 200 in an amount ranging from about 70 wt. % to about 99 wt. % - including all wt. % and sub-ranges there-between - based on the total dry-weight of the protective coating 200. In some embodiments, the pigment composition may be present in the protective coating 200 in an amount ranging from about 80 wt. % to about 99 wt. % - including all wt. % and sub-ranges there-between - based on the total dry-weight of the protective coating 200. In some embodiments, the pigment composition may be present in the protective

coating 200 in an amount ranging from about 85 wt. % to about 98 wt. % - including all wt. % and sub-ranges there-between - based on the total dry-weight of the protective coating 200.

Similar to the phrase "dry-state" - the phrase "dry-weight" refers to the weight of a component or composition without including any additional weight of liquid carrier. Thus, when calculating the dry weight of a component or composition, the calculation should be based solely on the weight of the solid components (e.g., pigment, binder, etc.), and should exclude any amount of residual liquid carrier that may still be present from the wet-state.

The pigment composition may comprise a pigment. The pigment composition may further comprise a pigment extender.

The pigment may be an inorganic pigment. The pigment may be selected from one or more of particles of carbon black, graphite, graphene, copper oxide, copper oxide containing glasses, iron oxide, zinc oxide, calcium carbonate, manganese oxide, titanium dioxide, calcium carbonate, silver halides, silver containing glasses, and combinations thereof. The inorganic pigments may include individual particles having colors selected from, but not limited to, red, blue, yellow, black, green, brown, violet, white, grey and combinations thereof.

The pigment composition may further comprise a pigment extender, such as aluminum trihydrate. The pigment composition may further comprise diatomaceous earth.

The protective coating 200 may further comprise a dispersant. The dispersant may be present in the protective coating 200 in an amount ranging from about 0.1 wt. % to about 2.0 wt. % based on the total dry-weight of the protective coating 200 - including all wt. % and sub-ranges there-between. In some embodiments, the dispersant may be present in the protective coating 200 in an amount ranging from about 0.1 wt. % to about 1.0 wt. % based on the total dry-weight of the protective coating 200 - including all wt. % and sub-ranges there-between. The dispersant may be ionic in nature - i.e., comprise one or more ionic groups such as anionic group or cationic group. In some embodiments, the ionic group is anionic.

According to some embodiments, the dispersant may comprise an anionic polyacrylic polymer having a salt group formed from a neutralization of an acid group with a compound forming a cation. For examples, the polymer may comprise one or more pendant side chains comprising a terminal carboxylic acid group that is neutralized with sodium or ammonia to form a carboxylate anion and a sodium cation and/or ammonium cation. Alternatively, the polymer may comprise one or more pendant side chains comprising a terminal sulfonic acid group that is neutralized with the aforementioned sodium or ammonia compounds to form a salt group.

The protective coating 200 may further comprise a rheology modifier. The term "thickening agent" may refer to a thickening agent capable of modifying the rheological properties (e.g., viscosity) if the protective coating in the wet-state. The rheology agent may be present in the protective coating 200 in an amount ranging from about 0.01 wt. % to about 0.5 wt. % based on the total dry-weight of the protective coating 200 - including all wt. % and sub-ranges there-between. In some embodiments, the rheology agent may be present in the protective coating 200 in an amount ranging from about 0.04 wt. % to about 0.4 wt. % based on the total dry-weight of the protective coating 200 - including all wt. % and sub-ranges there-between.

Non-limiting examples of thickening agents include natural cellulosics, e.g. hydroxyl ethyl cellulose,-carboxymethyl cellulose, and polysaccharides as well as inorganic thickeners, e.g. laponite, organoclay and hydrous magnesium aluminum-silicate. In some embodiments, the thickener is laponite.

The protective coating 200 may further comprise one or more of an additive include defoamers, wetting agents, flame retardants, and the like. The additive may be present in an amount ranging from about 0.01 wt. % to about 30 wt. % based on the total dry weight of the protective coating 200.

The protective coating 200 may be formed by applying a coating composition in the wet-state. The coating composition may comprise the dry components of the protective coating 200 (also referred to as the "solid coating component" - e.g., the binder, the protective agent, the pigment composition, the thickening agent, etc.) blended with a liquid carrier. The liquid carrier may be selected from water, VOC solvent - such as acetone, toluene, methyl acetate - or combinations thereof. In some embodiments, the liquid carrier may be water and comprises less than 1 wt. % of VOC solvent based on the total weight of the liquid carrier.

The coating composition may have a solid's content of at least 15 wt. % based on the total weight of the coating composition in the wet-state. Stated otherwise, the liquid carrier is present in a maximum amount of about 85 wt. % based on the total weight of the coating composition in the wet-state.

The solids content of the coating composition in the wet-state may range from about 15 wt. % to about 80 wt. % - including all wt. % and sub-ranges there-between. In some embodiments, the solids content of the coating composition in the wet-state may range from about 20 wt. % to about 70 wt. % based on the total weight of the coating composition - including all wt. % and sub-ranges there-between. In some embodiments, the solids content of the coating composition in the wet-state may range from about 30 wt. % to about 60 wt. % based on the total weight of the coating composition - including all wt. % and sub-ranges there-between. In some embodiments, the coating composition in the wet-state may have a solids content ranging from 50 wt. % to about 60 wt. - including all wt. % and sub-ranges there-between. % based on the total weight of the coating composition.

The solid's content is calculated as the fraction of materials present in the wet-state coating composition that are not the liquid carrier. Specifically, the solid's content of the wet-state coating composition may be calculated as the amount of binder, filler, pigment, dispersant, defoamer, protective agent, flame retardant, in the dry-state coating composition and dividing it by the total weight of the coating composition in the wet-state (including both solid components and liquid carrier).

Therefore, the amount of each component in the wet-state coating may be calculated by multiplying the desired amount of each of the dry component (e.g., pigment, protective agent) that is present in the protective coating 200 in the dry-state by the total solids content of the coating composition in the wet-state. For example, for a protective coating 200 in the dry-state comprising about 70 wt. % of pigment, whereby that protective coating 200 was applied as a wet-state coating composition having a solids content of 65 wt. % - the amount of the pigment in the wet-state coating composition would be 45.5 wt. % based on the total weight of the coating composition in the wet-state - i.e., 70 wt. % x 0.65 = 45.5 wt. % of pigment in the coating composition in the wet-state.

The coating composition in the wet-state may be applied to one of the upper surface 121, the lower surface 122, and/or the side surface 123 of the body 120 in an amount ranging from about 26 $g/m^2$ to about 450 $g/m^2$ - including all sub-ranges and values there-between. The coating composition in the wet-state may be applied by roll coating, brush coating, and spray coating, and/or curtain blade.

Specifically, the coating composition may be dried from the wet-state to the dry-state in a conventional oven at a first elevated temperature for a first drying period. The first elevated temperature may range from about 67 °C to about 232 °C - including all sub-ranges and temperature there-between. In some embodiments, the first elevated temperature may range from about 67 °C to about 190 °C - including all sub-ranges and temperature there-between. In some embodiments, the first elevated temperature may range from about 93 °C to about 232 °C - including all sub-ranges and temperature there-between.

The first drying period may range from about 10 seconds to about 120 seconds - including all sub-ranges and temperature there-between.

The protective coating 200 in the dry-state may be substantially continuous. The term "substantially continuous" refers to less than 5 % of the available surface area on the referenced surface contains pin-holing or blistering. The protective coating 200 may be substantially continuous such that the acoustic properties of the body 120 are not substantially hindered, thereby allowing the resulting building panel 100 to also function as an acoustical building panel. Stated otherwise, even with the protective coating 200 applied to one or more of the upper surface 121, the lower surface 122, and/or the side surface 123 of the body 120, the overall building panel 100 may still exhibit acoustical properties (i.e., NRC and CAC performance) substantially equal to and/or overlapping with that of the naked body

The building panel of the present invention may be a ceiling panel or tile, wall panel, wall covering (e.g., wallpaper) or directly to a wall (e.g., painted dry wall, wood wall paneling, such as wainscot, baseboard molding, crown molding). In other embodiments, the coating composition may be applied directly to a glass surface (e.g., a door, a window, etc.). In other embodiments of the present invention, the coating composition may be applied various textiles - such as felts, upholstery, or window hangings (e.g., curtains), and various paper products (e.g., paper towels, coated paper, cardboard, and the like), decorative shower-curtaining liners. In other embodiments, the coating composition may be applied to a window blind (formed from cellulosic material, polymeric material, or inorganic material). The coating composition may be applied to other various indoor surfaces for the purpose of reducing VOCs and odor in a closed-environment. In other embodiments, the coating composition may be applied to packaging products (e.g., styrofoam, recycled packaging).

As used throughout, ranges are used as shorthand for describing each and every value that is within the range. Any value within the range can be selected as the terminus of the range. In addition, all references cited herein are hereby incorporated by referenced in their entireties. In the event of a conflict in a definition in the present disclosure and that of a cited reference, the present disclosure controls.

While the invention has been described with respect to specific examples including presently preferred modes of carrying out the invention, those skilled in the art will appreciate that there are numerous variations and permutations of the above described systems and techniques. It is to be understood that other embodiments may be utilized and structural and functional modifications may be made without departing from the scope of the present invention. Thus, the spirit and scope of the invention should be construed broadly as set forth in the appended claims.

EXAMPLES

An experiment was conducted to determine the anti-microbial activity of the anti-microbial coating of the present invention.

The binder of the following examples includes a polyvinyl acetate homopolymer. The pigment composition ("PC") comprises $TiO_2$, $CaCO_3$, aluminum trihydrate, and diatomaceous earth. The additive composition ("AC") comprises one or more dispersants, and defomers. The antimicrobial agents of the following experiment include:

Antimicrobial Agent 1 ("AA1"): blend of didecyl dimethyl ammonium chloride and

surfactant composition having an HLB value of about 12
Antimicrobial Agent 2 ("AA2"): blend of triazole compound and 2,2 dibromo-3-nitrilopropionamide ("DBNPA")
Thickening Agent 1 ("TA1"): laponite
Thickening Agent 2 ("TA2"): hydroxyethylcellulose
Binder 1: latex polymer comprises styrene acrylic copolymer
Binder 2: polyvinyl acetate homopolymer

The dry formulation of each coating of Comparative Examples 1-3 and Example 1 are set forth in Table 1 - the amounts of Table 1 are weight percent of dry mass of the total coating.

**Table 1**

| | Comp. Ex. 1 | Comp. Ex. 2 | Ex. 1 |
|---|---|---|---|
| Binder 1 | 5.03 | - | 4.46 |
| Binder 2 | - | 5.06 | - |
| AA1 | - | - | 1.02 |
| AA2 | - | 0.03 | - |
| TA1 | - | - | 0.05 |
| TA2 | 0.22 | 0.22 | - |
| PC | 94.10 | 93.92 | 93.36 |
| AC | 0.65 | 0.77 | 1.11 |
| | | | |
| Total Solids | 100% | 100% | 100% |

In the wet-state, each coating formulation of Comparative Examples 1-3 and Example 1 had liquid carrier added to achieve the desired solids content. The solid's content of each coating in the wet-state is set forth in Table 2 - the amounts of Table 2 are weight percent.

**Table 2**

| | Comp. Ex. 1 | Comp. Ex. 2 | Ex. 1 |
|---|---|---|---|
| | Carm10Max | Control | Ca Quat Max |
| Solid Content Amount | 53.55 | 51.04 | 54.19 |
| Liquid Carrier | 46.45 | 48.96 | 45.81 |
| Amount | | | |
| Total Amount | 100 | 100 | 100 |

Each coating was further evaluated for antimicrobial characteristics. Specifically, each coating was applied to a fibrous substrate (herein referred to a test piece), whereby each test piece was then placed in an agar dish having inoculated agar surface of each relevant microbial organism. After incubation, the test pieces were evaluated for the presence of a zone of inhibition as well as growth of the test organism beneath the test piece - the results set forth below in Table 3.

**Table 3**

| | Comp. Ex. 1 | Comp. Ex. 2 | Ex. 1 |
|---|---|---|---|
| | | | |
| Staphylococcus aureus | | | |
| Inhibition Zone | N | N | Y |
| Growth | Y | Y | N |

(continued)

| | Comp. Ex. 1 | Comp. Ex. 2 | Ex. 1 |
|---|---|---|---|
| | | | |
| Klebsiella pneumoniae | | | |
| Inhibition Zone | N | N | Y |
| Growth | Y | Y | N |
| | | | |
| Escherichia Coli | | | |
| Inhibition Zone | N | N | N |
| Growth | Y | Y | Y |
| | | | |
| Staphylococcus aureus MRSA | | | |
| Inhibition Zone | N | N | Y |
| Growth | Y | Y | N |

As demonstrated by Tables 1 and 3, although the coating composition of the present invention exhibited (i.e., Ex. 1) not only created a zone of inhibition for three of the four test organisms, but it also unexpectedly prevented growth beneath the test sample in such 3 of 4 test organisms. Such result is impactful as it provides a surprisingly effective manner to impart anti-microbial growth onto a building panel without having to use other biocide and/or antimicrobial agents - such as borate esters.

## Claims

**1.** A building panel comprising:

a fibrous substrate; and
a coating applied to the substrate, the coating comprising a blend of:

a binder comprising a latex polymer;
a thickening agent;
a pigment composition; and
an antimicrobial composition comprising

a quaternary amine;
a surfactant composition having an HLB value ranging from about 11 to 13;

wherein the antimicrobial composition is present in an amount ranging from about 0.1 wt. % to about 10 wt. % based on the total weight of the coating.

**2.** The building panel according to claim 1, wherein the quaternary amine is selected from one or more of dialkyl ammonium compound having a halide anion.

**3.** The building panel according to claim 2, wherein the quaternary amine is didecyldimethylammonium chloride.

**4.** The building panel according to any one of claims 1 to 3, wherein the surfactant composition comprises a first surfactant and a second surfactant, the first surfactant comprising a first monooleate compound and the second surfactant comprising a second monooleate compound, whereby the first surfactant and the second surfactant are different.

**5.** The building panel according to claim 4, wherein the first monooleate compound is polyoxyethylene sorbitan monooleate and wherein the second monooleate compound is sorbitan monooleate.

6. A building panel comprising:

a fibrous substrate; and
a coating applied to the substrate, the coating comprising a blend of:

a binder comprising a latex polymer;
a thickening agent comprising laponite;
a pigment composition comprising titanium dioxide and calcium carbonate; and
an antimicrobial composition comprising

a quaternary amine that is a dialkyl ammonium compound having a halide anion; and
a surfactant composition having an HLB value ranging from about 11 to 13, the surfactant composition comprising a first surfactant that is a first monooleate compound and a second surfactant that is a second monooleate compound, the first monooleate compound and the second monooleate compound are different.

7. The building panel according to claim 6, wherein the quaternary amine is didecyldimethylammonium chloride, and wherein the quaternary amine is present in an amount ranging from about 0.1 wt. % to about 2.0 wt. % based on the total weight of the coating.

8. The building panel according to any one of claims 6 to 7, wherein the first monooleate compound is polyoxyethylene sorbitan monooleate.

9. The building panel according to any one of claims 6 to 8, wherein the dialkyl ammonium compound having a halide anion is the only quaternary amine present in the antimicrobial composition.

10. A building system comprising:

a support surface; and
at least one building panel according to claims 1 to 9,
wherein the building panel is supported by the support surface.

11. A coating composition for application to a building panel, the coating comprising:

a liquid carrier;
solid coating component comprising

a binder comprising a latex polymer;
a thickening agent comprising laponite;
a pigment composition comprising titanium dioxide and calcium carbonate; and
an antimicrobial composition comprising:

a quaternary amine;
a surfactant composition having an HLB value ranging from about 11 to 13;

wherein the antimicrobial composition is present in an amount ranging from about 1 wt. % to about 10 wt. % based on the total weight of the solid coating component.

12. The coating composition according to claim 11, wherein the quaternary amine is didecyldimethylammonium chloride.

13. The coating composition according to any one of claims 11 to 12, wherein the surfactant composition comprises a first surfactant and a second surfactant, the first surfactant comprising a first monooleate compound and the second surfactant comprising a second monooleate compound, whereby the first surfactant and the second surfactant are different.

14. The coating composition according to claim 13, wherein the first monooleate compound is polyoxyethylene sorbitan monooleate and wherein the second monooleate compound is sorbitan monooleate.

**15.** A method of coating a substrate comprising:

a) applying the coating composition according to anyone of claims 43 to 60 to a fibrous substrate;
b) drying the coating composition such that the liquid carrier is removed from the substrate.

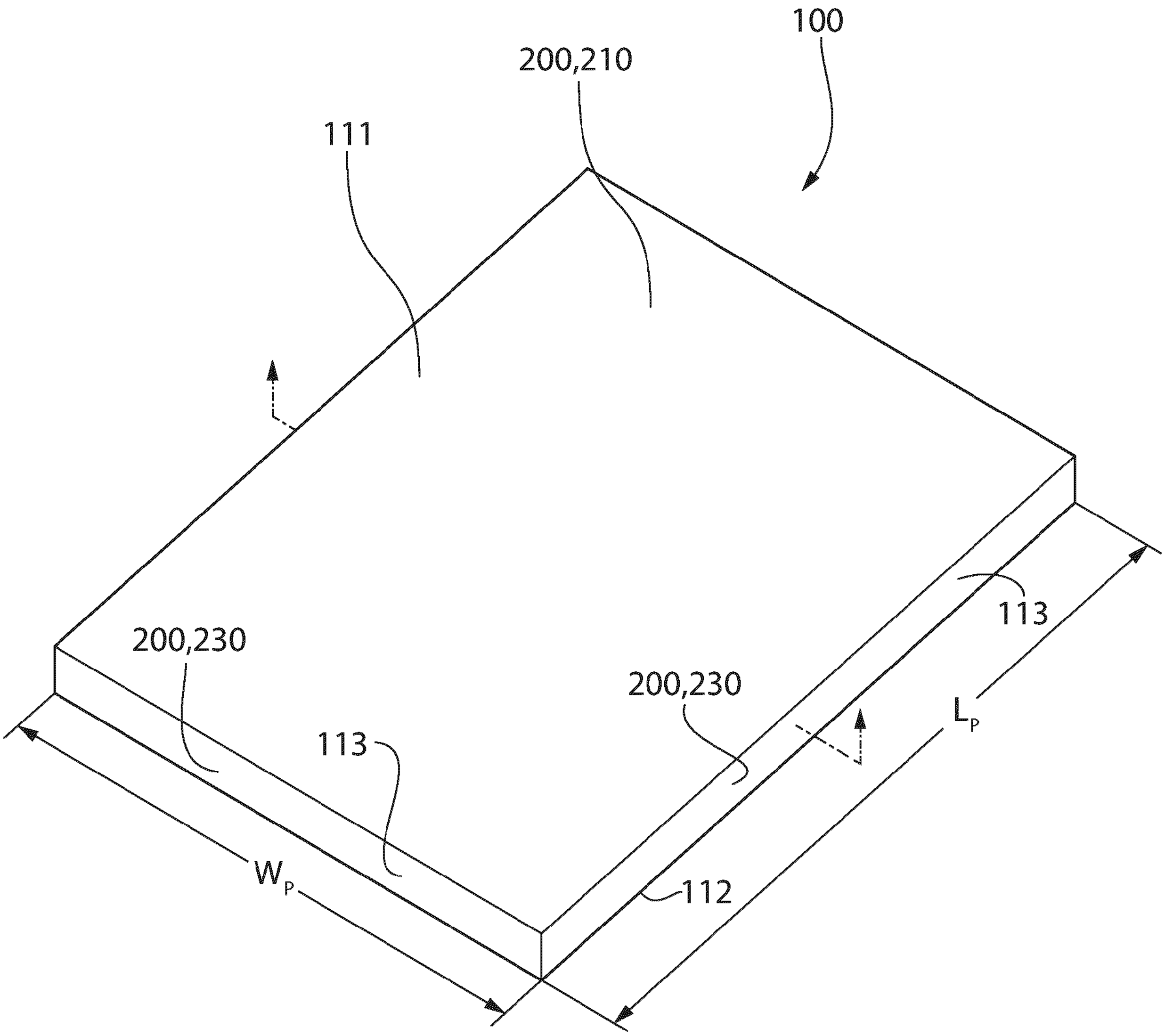


FIG. 1

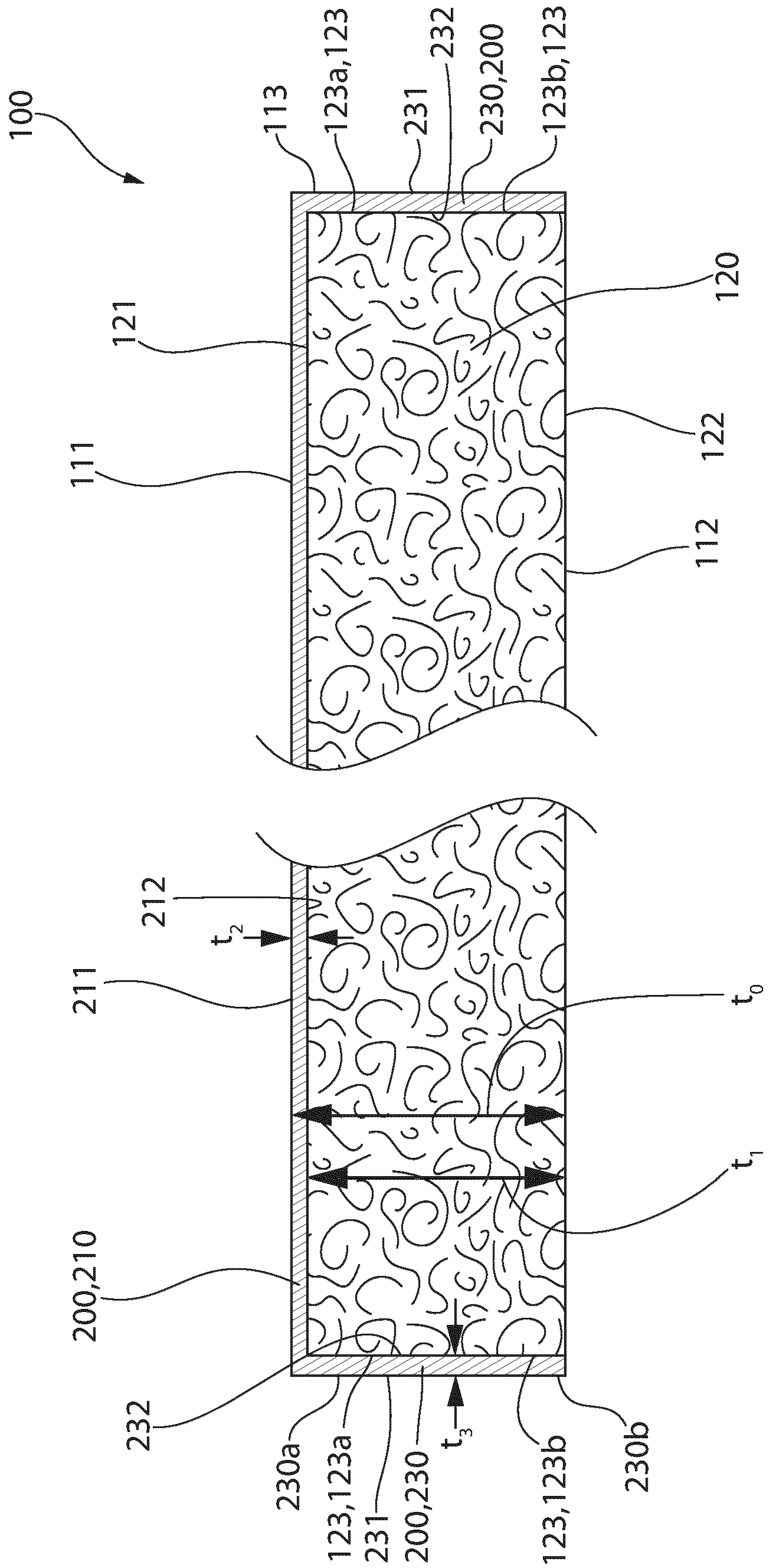
100
113
123a,123
231
232
230,200
123b,123
121
120
111
122
112
212
$t_2$
211
$t_0$
$t_1$
200,210
232
230a
123,123a
231
200,230
$t_3$
123,123b
230b

FIG. 2

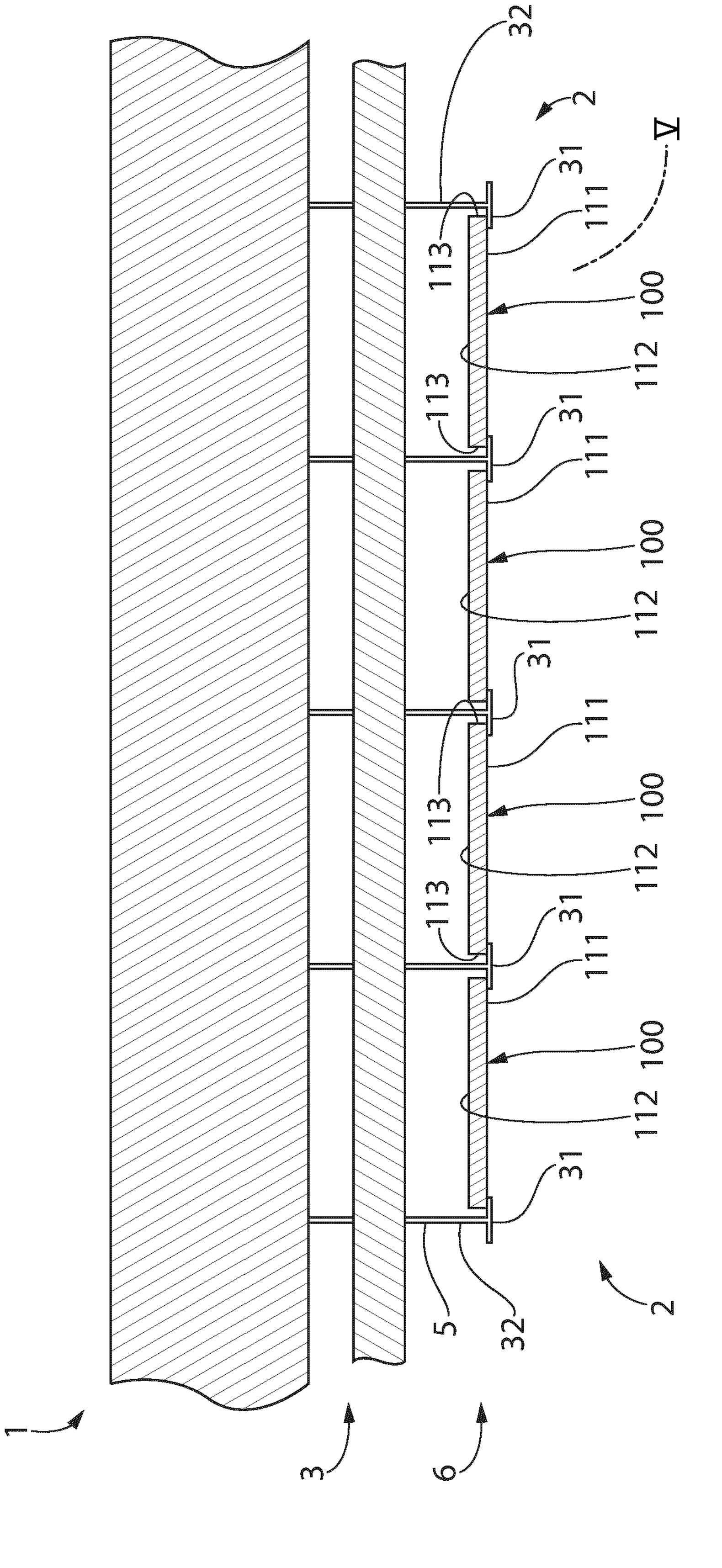


FIG. 3

Europäisches Patentamt
European Patent Office
Office européen des brevets

# EUROPEAN SEARCH REPORT

Application Number
EP 24 22 2543

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | WO 2022/240633 A1 (ARMSTRONG WORLD IND INC [US]) 17 November 2022 (2022-11-17)<br>* paragraphs [0062], [0077], [0080] *<br>* examples 1-15 *<br>* figure 3 *<br>* claims 1-26 * | 1-15<br>1-15 | INV.<br>A01N33/12<br>A01N43/653<br>A01N37/34<br>A01N25/34<br>A01N25/30<br>A01P1/00<br>C09D5/14<br>E04F13/16 |
| Y | WO 2022/119977 A1 (ARMSTRONG WORLD IND INC [US]) 9 June 2022 (2022-06-09)<br>* paragraph [0101] *<br>* example 1 *<br>* figure 3 *<br>* claims 1, 8, 9, 13, 14, 23-25 * | 1-15 | |
| Y | WO 2022/119845 A1 (ARMSTRONG WORLD IND INC [US]) 9 June 2022 (2022-06-09)<br>* figure 3 *<br>* claims 1-12, 35-50, 52 * | 1-15 | |
| Y | WO 2019/046226 A1 (ARMSTRONG WORLD IND INC [US]) 7 March 2019 (2019-03-07)<br>* paragraph [0136] *<br>* figure 3 *<br>* claims 18-32, 57, 64, 67 * | 1-15 | TECHNICAL FIELDS SEARCHED (IPC)<br>A01N<br>A01P<br>E04F<br>C09D |
| Y | WO 2013/095743 A1 (SHERWIN WILLIAMS CO [US]; GISSER KATHLEEN R [US] ET AL.) 27 June 2013 (2013-06-27)<br>* paragraphs [0012], [0015], [0033] *<br>* claims 1-3,. 8, 13, 27 * | 1-15 | |
| Y | WO 2018/067344 A1 (EASTMAN CHEM CO [US]) 12 April 2018 (2018-04-12)<br>* table 7 * | 1-15 | |

The present search report has been drawn up for all claims

1

| Place of search | Date of completion of the search | Examiner |
|---|---|---|
| Munich | 9 April 2025 | Habermann, Jörg |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 24 22 2543

This annex lists the patent family members relating to the patent documents cited in the above-mentioned European search report. The members are as contained in the European Patent Office EDP file on
The European Patent Office is in no way liable for these particulars which are merely given for the purpose of information.

09-04-2025

| Patent document cited in search report | Publication date | Patent family member(s) | Publication date |
|---|---|---|---|
| WO 2022240633 A1 | 17-11-2022 | CA 3218901 A1 | 17-11-2022 |
| | | WO 2022240633 A1 | 17-11-2022 |
| WO 2022119977 A1 | 09-06-2022 | CA 3200806 A1 | 09-06-2022 |
| | | US 2022177711 A1 | 09-06-2022 |
| | | WO 2022119977 A1 | 09-06-2022 |
| WO 2022119845 A1 | 09-06-2022 | CA 3200891 A1 | 09-06-2022 |
| | | US 2022177710 A1 | 09-06-2022 |
| | | WO 2022119845 A1 | 09-06-2022 |
| WO 2019046226 A1 | 07-03-2019 | BR 112020004194 A2 | 06-10-2020 |
| | | CA 3074076 A1 | 07-03-2019 |
| | | EP 3676024 A1 | 08-07-2020 |
| | | US 2019062585 A1 | 28-02-2019 |
| | | US 2022073778 A1 | 10-03-2022 |
| | | WO 2019046226 A1 | 07-03-2019 |
| WO 2013095743 A1 | 27-06-2013 | AR 088086 A1 | 07-05-2014 |
| | | BR 112014007351 A2 | 04-04-2017 |
| | | CA 2849121 A1 | 27-06-2013 |
| | | CL 2014000728 A1 | 10-10-2014 |
| | | EP 2760283 A1 | 06-08-2014 |
| | | EP 3167714 A1 | 17-05-2017 |
| | | EP 3170394 A1 | 24-05-2017 |
| | | ES 2624425 T3 | 14-07-2017 |
| | | ES 2815680 T3 | 30-03-2021 |
| | | ES 2879224 T3 | 22-11-2021 |
| | | JP 6048897 B2 | 21-12-2016 |
| | | JP 2014532100 A | 04-12-2014 |
| | | MX 351268 B | 06-10-2017 |
| | | US 2013084398 A1 | 04-04-2013 |
| | | US 2016007596 A1 | 14-01-2016 |
| | | US 2016194502 A1 | 07-07-2016 |
| | | WO 2013095743 A1 | 27-06-2013 |
| WO 2018067344 A1 | 12-04-2018 | CN 109790399 A | 21-05-2019 |
| | | EP 3523374 A1 | 14-08-2019 |
| | | US 9932486 B1 | 03-04-2018 |
| | | WO 2018067344 A1 | 12-04-2018 |

EPO FORM P0459

For more details about this annex : see Official Journal of the European Patent Office, No. 12/82